(19) Europäisches Patentamt
European Patent Office
Office européen des brevets

(11) **EP 1 356 461 B1**

(12) **FASCICULE DE BREVET EUROPEEN**

(45) Date de publication et mention
de la délivrance du brevet:
**30.06.2010 Bulletin 2010/26**

(21) Numéro de dépôt: **01273554.4**

(22) Date de dépôt: **19.11.2001**

(51) Int Cl.:
***G10L 21/02*** *(2006.01)*

(86) Numéro de dépôt international:
**PCT/FR2001/003624**

(87) Numéro de publication internationale:
**WO 2002/061731 (08.08.2002 Gazette 2002/32)**

(54) **PROCEDE ET DISPOSITIF DE REDUCTION DE BRUIT**

RAUSCHVERMINDERUNGSVERFAHREN UND -EINRICHTUNG

NOISE REDUCTION METHOD AND DEVICE

(84) Etats contractants désignés:
**AT BE CH CY DE DK ES FI FR GB GR IE IT LI LU MC NL PT SE TR**

(30) Priorité: **30.01.2001 FR 0101220**

(43) Date de publication de la demande:
**29.10.2003 Bulletin 2003/44**

(73) Titulaire: **FRANCE TELECOM**
**75015 Paris (FR)**

(72) Inventeurs:
• **SCALART, Pascal**
**F-22560 Trebeurden (FR)**
• **MARRO, Claude**
**F-22220 Plouguiel (FR)**
• **MAUUARY, Laurent**
**22300 Lannion (FR)**

(74) Mandataire: **Loisel, Bertrand**
**Cabinet Plasseraud**
**52 rue de la Victoire**
**75440 Paris Cedex 09 (FR)**

(56) Documents cités:
**EP-A- 0 730 262    EP-A- 0 856 833**
**EP-A- 0 918 317**

• SIM B L ET AL: "A PARAMETRIC FORMULATION OF THE GENERALIZED SPECTRAL SUBTRACTION METHOD" IEEE TRANSACTIONS ON SPEECH AND AUDIO PROCESSING, IEEE INC. NEW YORK, US, vol. 6, no. 4, 1 juillet 1998 (1998-07-01), pages 328-336, XP000785363 ISSN: 1063-6676

**Description**

La présente invention concerne les techniques de traitement de signal servant à diminuer le niveau de bruit présent dans un signal d'entrée.

Un domaine d'application important est celui du traitement du signal audio (parole ou musique), comprenant de façon non-limitative :

- téléconférence et visioconférence en milieu bruité (en salle dédiée ou bien à partir d'ordinateurs multimédia, etc.) ;
- téléphonie : traitement au niveau des terminaux, fixes ou portables et/ou dans les réseaux de transport ;
- terminaux mains-libres, notamment de bureau, de véhicule ou portables ;
- prise de son dans les lieux publics (gare, aéroport, etc.) ;
- prise de son mains-libres dans les véhicules ;
- reconnaissance de parole robuste à l'environnement acoustique ;
- prise de son pour le cinéma et les médias (radio, télévision, par exemple pour le journalisme sportif ou les concerts, ...).

L'invention est également applicable à tout domaine où l'on cherche à extraire une information utile à partir d'une observation bruitée. On peut notamment citer les domaines suivants : imagerie sous-marine, télédétection sous-marine, traitement des signaux biomédicaux (EEG, ECG, imagerie biomédicale, etc.).

Un problème caractéristique de la prise de son concerne l'environnement acoustique dans lequel est placé le microphone de prise de son et plus particulièrement le fait que, en raison de l'impossibilité de maîtriser complètement cet environnement, un signal perturbateur (qualifié de bruit) est également présent au sein du signal d'observation.

Afin d'améliorer la qualité du signal, des systèmes de réduction de bruit sont développés dans le but d'extraire l'information utile en effectuant un traitement sur le signal d'observation bruité. Lorsque le signal audio est un signal de parole transmis à distance, ces systèmes permettent d'accroître son intelligibilité et de réduire la fatigue du correspondant. En plus de ces applications de communication parlée, l'amélioration de la qualité du signal de parole s'avère également utile pour la reconnaissance vocale, dont les performances sont fortement altérées lorsque l'utilisateur est dans un environnement bruyant.

Le choix d'une technique de traitement du signal pour réaliser l'opération de réduction de bruit dépend en premier lieu du nombre d'observations disponibles à l'entrée du traitement. Dans la présente description, nous considérerons le cas où un seul signal d'observation est disponible. Les méthodes de réduction de bruit adaptées à cette problématique mono-capteur reposent principalement sur des techniques de traitement du signal telles que le filtrage adaptatif par avance/retard, le filtrage paramétrique de Kalman, ou bien encore le filtrage par modification spectrale à court-terme.

Cette dernière famille (filtrage par modification spectrale à court-terme) regroupe pratiquement l'ensemble des solutions utilisées dans les équipements industriels en raison de la simplicité des concepts mis en jeu et de la grande disponibilité d'outils de base (par exemple la transformée de Fourier discrète) nécessaires à leur programmation. Cependant, l'essor de ces techniques de réduction de bruit repose beaucoup sur la possibilité d'effectuer facilement ces traitements en temps réel sur un processeur de traitement du signal, sans introduire de distorsions majeures sur le signal disponible en sortie du traitement. Dans les méthodes de cette famille, le traitement consiste le plus souvent à estimer une fonction de transfert d'un filtre réducteur de bruit, puis à réaliser le filtrage à partir d'une multiplication dans le domaine spectral, ce qui permet d'opérer la réduction de bruit par atténuation spectrale à court-terme, avec un traitement par blocs.

On note $x(n)$, le signal d'observation bruité, issu du mélange du signal désiré $s(n)$ et du bruit de perturbation $b(n)$, $n$ désignant l'indice temporel en temps discret. Le choix d'une représentation en temps discret est lié à une mise en oeuvre orientée vers le traitement numérique du signal, mais on notera que les méthodes décrites ci-après s'appliquent aussi aux signaux en temps continu. Le signal est analysé par segments successifs ou trames d'indice $k$ de longueur constante. Des notations couramment utilisées pour des représentations dans les domaines discrets temps et fréquence sont :

- $X(k,f)$ : transformée de Fourier ($f$ est l'indice de fréquence) de la $k$-ième trame ($k$ est l'indice de trame) du signal analysé $x(n)$ ;
- $S(k,f)$ : transformée de Fourier de la $k$-ième trame du signal désiré $s(n)$ ;
- $\hat{v}$ : estimation d'une grandeur (temporelle ou fréquentielle) $v$ ; par exemple, $\hat{S}(k,f)$ est l'estimation de la transformée de Fourier du signal désiré ;
- $\gamma_{uu}(f)$: densité spectrale de puissance (DSP) d'un signal $u(n)$.

Dans la plupart des techniques de réduction de bruit le signal bruité $x(n)$ subit un filtrage dans le domaine fréquentiel pour produire un signal utile estimé $\hat{s}(n)$ le plus proche possible du signal original s(n) dépourvu de toute perturbation. Comme indiqué précédemment, cette opération de filtrage consiste à réduire chaque composante fréquentielle f du signal bruité compte tenu du rapport signal à bruit (RSB) estimé dans cette composante. Ce RSB fonction de la fréquence f est noté ici $\eta(k,f)$ pour la trame k.

Pour chacune des trames, le signal est d'abord multiplié par une fenêtre de pondération permettant d'améliorer l'estimation ultérieure des grandeurs spectrales nécessaires au calcul du filtre réducteur de bruit. Chaque trame ainsi fenêtrée est ensuite analysée dans le domaine spectral (généralement à l'aide de la transformée de Fourier discrète dans sa version rapide). Cette opération est appelée transformation de Fourier à court terme (TFCT). Cette représentation fréquentielle X(k,f) du signal observé permet à la fois d'estimer la fonction de transfert H(k,f) du filtre réducteur de bruit, et d'appliquer ce filtre dans le domaine spectral par simple multiplication entre cette fonction de transfert et le spectre à court terme du signal bruité, soit :

$$\hat{S}(k,f) = H(k,f).X(k,f) \qquad\qquad (1)$$

Le retour dans le domaine temporel du signal ainsi obtenu est ensuite effectué par simple transformée spectrale inverse. La synthèse du signal débruité est généralement effectuée par une technique de recouvrement et addition de blocs (OLA, « overlap add ») ou une technique de sauvegarde de blocs (OLS, « overlap save »). Cette opération de reconstruction du signal dans le domaine temporel est appelée transformation de Fourier à court terme inverse (TFCTI).

On trouvera une description détaillée des méthodes d'atténuation spectrale à court terme dans les références : J.S. Lim, A.V. Oppenheim, "Enhancement and bandwidth compression of noisy speech", Proceedings of the IEEE, vol. 67, pp. 1586-1604, 1979; et R.E. Crochiere, L.R. Rabiner, "Multirate digital signal processing", Prentice Hall, 1983.

Les principales tâches réalisées par un tel système de réduction de bruit sont :

- la détection d'activité vocale (DAV) ;
- l'estimation de la densité spectrale de puissance (DSP) de bruit pendant les instants d'inactivité vocale ;
- l'application d'une atténuation spectrale à court terme évaluée à partir d'une règle de suppression des composantes spectrales de bruit ;
- la synthèse du signal traité à partir d'une technique de type OLS ou OLA.

Le choix de la règle de suppression des composantes de bruit est important puisqu'il détermine la qualité du signal transmis. Ces règles de suppression ne modifient généralement que l'amplitude |X(k, f)| des composantes spectrales du signal bruité, et non leur phase. On fait en général les hypothèses suivantes :

- le bruit et le signal utile sont statistiquement décorrélés ;
- le signal utile est intermittent (présence de périodes de silence dans lesquelles le bruit peut être estimé) ;
- l'oreille humaine n'est pas sensible à la phase du signal (voir D.L. Wang, J.S. Lim, "The unimportance of phase in speech enhancement ", IEEE Trans. on ASSP, vol. 30, N° 4, pp. 679-681, 1982).

L'atténuation spectrale à court-terme H(k,f), appliquée au signal d'observation X(k,f) sur la trame d'indice k à la composante fréquentielle f, est généralement déterminée à partir de l'estimation du rapport signal à bruit local $\eta(k,f)$. Une caractéristique commune à l'ensemble des règles de suppression est leur comportement asymptotique, donné par :

$$H(k,f) \approx 1 \quad \text{pour} \ \eta(k,f) \gg 1$$

$$H(k,f) \approx 0 \quad \text{pour} \ \eta(k,f) \ll 1 \qquad\qquad (2)$$

Les règles de suppression couramment employées sont :

- la soustraction spectrale en puissance (voir l'article précité de J.S. Lim et A.V. Oppenheim), pour laquelle la fonction de transfert H(k,f) du filtre réducteur de bruit s'écrit :

$$H(k,f) = \sqrt{\frac{\gamma_{ss}(k,f)}{\gamma_{bb}(k,f) + \gamma_{ss}(k,f)}} \qquad (3)$$

- la soustraction spectrale en amplitude (voir S.F. Boll, "Suppression of acoustic noise in speech using spectral subtraction", IEEE Trans. on Audio, Speech and Signal Processing, vol. 27, N°. 2, pp. 113-120, Avril 1979), pour laquelle la fonction de transfert H(k,f) s'écrit :

$$H(k,f) = 1 - \sqrt{\frac{\gamma_{bb}(k,f)}{\gamma_{bb}(k,f) + \gamma_{ss}(k,f)}} \qquad (4)$$

- la mise en oeuvre directe du filtre de Wiener (cf. article précité de J.S. Lim et A.V. Oppenheim), pour laquelle la fonction de transfert H(k,f) s'écrit :

$$H(k,f) = \frac{\gamma_{ss}(k,f)}{\gamma_{bb}(k,f) + \gamma_{ss}(k,f)} \qquad (5)$$

Dans ces expressions, $\gamma_{ss}(k,f)$ et $\gamma_{bb}(k,f)$ représentent respectivement les densités spectrales de puissance du signal utile et du bruit présent au sein de la composante fréquentielle f du signal d'observation X(k,f) sur la trame d'indice k.

A partir des expressions (3)-(5), il est possible d'étudier, en fonction du rapport signal à bruit local mesuré sur une composante fréquentielle donnée f, le comportement de l'atténuation spectrale appliquée au signal bruité. On constate que toutes les règles donnent lieu à une atténuation identique lorsque le rapport signal à bruit local est important. La règle de soustraction en puissance est optimale au sens du maximum de vraisemblance pour des modèles gaussiens (voir O. Cappé, "Elimination of the musical noise phenomenon with the Ephraim and Malah noise suppressor", IEEE Trans. on Speech and Audio Processing, vol. 2, N°. 2, pp. 345-349, Avril 1994). Mais c'est celle pour laquelle la puissance du bruit reste la plus importante en sortie du traitement. Pour l'ensemble des règles de suppression, on constate qu'une faible variation du rapport signal à bruit local autour de la valeur de coupure suffit à faire passer du cas de l'atténuation totale (H(k,f) ≈ 0) au cas d'une modification spectrale négligeable (H(k,f) ≈ 1).

Cette dernière propriété constitue l'une des causes du phénomène qualifié de « bruit musical ». En effet, le bruit ambiant, caractérisé à la fois par des composantes déterministes et aléatoires, ne peut être caractérisé que durant les périodes de non-activité vocale. Du fait de la présence de ces composantes aléatoires, il existe de très fortes variations entre la contribution réelle d'une composante fréquentielle f du bruit pendant les périodes d'activité vocale et son estimation en moyenne réalisée sur plusieurs trames pendant les instants de non-activité vocale. Du fait de cette différence, l'estimation du rapport signal à bruit local peut fluctuer autour du niveau de coupure, soit donc engendrer en sortie de traitement des composantes spectrales qui apparaissent, puis disparaissent et dont la durée de vie moyenne ne dépasse pas statistiquement l'ordre de grandeur de la fenêtre d'analyse considérée. La généralisation de ce comportement sur l'ensemble de la bande passante introduit un bruit résiduel audible et gênant, qualifié de « bruit musical ».

Plusieurs études se sont attachées à réduire l'influence de ce bruit. Les solutions préconisées se déclinent suivant plusieurs axes :

- moyennage des estimations à court-terme (cf. article précité S.F. Boll) ;
- surestimation du spectre de puissance du bruit (voir M. Berouti et al, "Enhancement of speech corrupted by acoustic noise", Int. Conf. on Speech, Signal Processing, pp. 208-211, 1979; et P. Lockwood, J. Boudy, "Experiments with a non-linear spectral subtractor, hidden Markov models and the projection for robust speech recognition in cars", Proc. of EUSIPCO'91, pp. 79-82, 1991);
- poursuite des minima de la densité spectrale de bruit (voir R. Martin, "Spectral subtraction based on minimum statistics", in Signal Processing VII: Theories and Applications, EUSIPCO'94, pp. 1182-1185, Sept. 1994).

Plusieurs études ont également porté sur l'établissement de nouvelles règles de suppression basées sur des modèles statistiques des signaux de parole et de bruit additif. Ces études ont permis d'introduire de nouveaux algorithmes à « décisions souples » car ils possèdent un degré de liberté supplémentaire par rapport aux méthodes classiques (voir R.J. Mac Aulay, M.L. Malpass, "Speech enhancement using a soft-decision noise suppression filter", IEEE trans. on Audio, Speech and Signal Processing, vol. 28, N°. 2, pp. 137-145, Avril 1980, Y. Ephraim, D. Malah, "Speech enhancement using optimal non-linear spectral amplitude estimation", Int. Conf. on Speech, Signal Processing, pp. 1118-1121, 1983, Y. Ephraim, D. Malha, "Speech enhancement using a minimun mean square error short-time spectral amplitude estimator", IEEE Trans. on ASSP, vol. 32, N° 6, pp. 1109-1121, 1984).

Les règles de modification spectrale à court terme précitées présentent les caractéristiques suivantes :

- Le calcul de l'atténuation spectrale à court-terme repose sur l'estimation du rapport signal à bruit sur chacune des composantes spectrales, les équations (3)-(5) faisant chacune intervenir la quantité :

$$\eta(k,f) = \frac{\gamma_{ss}(k,f)}{\gamma_{bb}(k,f)} \qquad\qquad (6)$$

Ainsi, les performances de la technique de réduction de bruit (distorsions, réduction effective du niveau de bruit) sont gouvernées par la pertinence de cet estimateur du rapport signal à bruit.

- Ces techniques sont basées sur un traitement par blocs (avec possibilité de recouvrement entre les blocs successifs) qui consiste à filtrer l'ensemble des échantillons d'une trame donnée, présente à l'entrée du dispositif de réduction de bruit, par une seule atténuation spectrale. Cette propriété réside dans le fait que l'application du filtre est effectué par une multiplication dans le domaine spectral. Ceci est particulièrement contraignant lorsque le signal présent sur la trame courante ne vérifie pas les hypothèses de stationnarité au second ordre, par exemple dans le cas d'un début ou fin de mot, ou bien dans le cas d'une trame mixte voisé/non-voisé.
- La multiplication effectuée dans le domaine spectral correspond en réalité à une opération de convolution cyclique. En pratique, pour éviter les distorsions, l'opération qu'on cherche à effectuer est une convolution linéaire, ce qui nécessite à la fois d'ajouter un certain nombre d'échantillons nuls à chaque trame d'entrée (technique dite du « zero padding ») et d'effectuer un traitement supplémentaire visant à limiter le support temporel de la réponse impulsionnelle du filtre réducteur de bruit. Satisfaire à la contrainte de convolution temporelle augmente ainsi nécessairement l'ordre de la transformée spectrale et, par suite, la complexité arithmétique du traitement de réduction de bruit. La technique la plus utilisée pour limiter le support temporel de la réponse impulsionnelle du filtre réducteur de bruit consiste à introduire une contrainte dans le domaine temporel, ce qui nécessite (i) une première transformation spectrale « inverse » permettant d'obtenir la réponse impulsionnelle h(k,n) à partir de la connaissance de la fonction de transfert du filtre H(k,f), (ii) une limitation du nombre de points de cette réponse impulsionnelle, conduisant à un filtre temporel tronqué h'(k,n), puis (iii) une seconde transformation spectrale « directe » permettant d'obtenir la fonction de transfert modifiée H'(k,f) à partir de la réponse impulsionnelle tronquée h'(k,n).
- En pratique, chaque trame d'analyse est multipliée par une fenêtre d'analyse w(n) avant d'effectuer l'opération de transformée spectrale. Lorsque le filtre réducteur de bruit est de type passe-tout (c'est-à-dire $H(k,f) \approx 1, \forall f$), la fenêtre d'analyse doit satisfaire à la condition suivante

$$\sum_{k} w(n{-}k.D) = 1 \qquad\qquad (7)$$

si l'on souhaite que la condition de reconstitution parfaite soit vérifiée. Dans cette, équation, le paramètre D représente le décalage (en nombre d'échantillons) entre deux trames d'analyse successives. D'un autre côté, le choix de la fenêtre de pondération w(n) (typiquement de type Hanning, Hamming, Blackman, etc.) conditionne la largeur du lobe principal de W(f) ainsi que l'amplitude des lobes secondaires (relativement à celle du lobe principal). Si le lobe principal est large, les transitions rapides de la transformée du signal original sont très mal approchées. Si l'amplitude relative des lobes secondaires est grande, l'approximation obtenue possède des oscillations gênantes, surtout autour des discontinuités. Il est donc difficile de satisfaire à la fois à la contrainte d'analyse spectrale pertinente (choix de la largeur du lobe principal, et de l'amplitude des lobes latéraux) et à la contrainte de faible retard introduit par le processus de filtrage de réduction de bruit (décalage temporel entre le signal en entrée et en sortie du traitement). Respecter la seconde contrainte amène à utiliser des trames successives sans aucun recouvrement et donc une fenêtre d'analyse de type rectangulaire, ce qui ne conduit pas à effectuer une analyse spectrale pertinente. Le seul moyen de respecter ces deux contraintes en même temps est d'effectuer une analyse spectrale à partir d'une première transformation spectrale réalisée sur une trame pondérée par une fenêtre d'analyse adéquate (pour effectuer une bonne estimation spectrale), et de réaliser en parallèle une seconde transformée spectrale sur les données non-fenêtrées (pour effectuer l'opération de convolution par multiplication spectrale). Une telle technique se révèle en pratique beaucoup trop coûteuse en termes de complexité arithmétique.

EP-A-0 710 et EP0918317 décrit un dispositif de réduction de bruit couplé à un annuleur d'écho. La réduction de bruit est opérée par un filtrage par blocs dans le domaine temporel, au moyen d'une réponse impulsionnelle obtenue par transformation de Fourier inverse de la fonction de transfert H(k,f) estimée en fonction du rapport signal à bruit au cours de l'analyse spectrale.

Un but principal de la présente invention est d'améliorer les performances des méthodes de réduction de bruit.

L'invention propose ainsi un procédé selon la revendication de réduction de bruit dans des trames successives d'un signal d'entrée, comprenant les étapes suivantes pour certaines au moins des trames :

- calculer un spectre du signal d'entrée par transformation dans le domaine fréquentiel ;
- obtenir un estimateur de niveau de bruit en fonction de la fréquence ;
- calculer un premier estimateur de niveau de signal utile dans la trame en fonction de la fréquence ;
- calculer la fonction de transfert d'un premier filtre réducteur de bruit sur la base du premier estimateur de niveau de signal utile et de l'estimateur de niveau de bruit ;
- calculer un second estimateur de niveau de signal utile dans la trame en fonction de la fréquence, en combinant le spectre du signal d'entrée et la fonction de transfert du premier filtre réducteur de bruit ;
- calculer la fonction de transfert d'un second filtre réducteur de bruit sur la base du second estimateur de niveau de signal utile et de l'estimateur de niveau de bruit ; et
- utiliser la fonction de transfert du second filtre réducteur de bruit dans une opération de filtrage de la trame pour produire un signal à bruit réduit.

Les niveaux de bruit et de signal utile qu'on estime sont typiquement des DSP, ou plus généralement des grandeurs corrélées à ces DSP.

Le calcul en deux passes, dont la particularité réside dans une mise à jour plus rapide de la DSP du signal utile $\gamma_{ss}$(k,f), confère au second filtre réducteur de bruit deux avantages appréciables par rapport aux méthodes antérieures. D'une part, on obtient un suivi plus rapide des non-stationnarités du signal utile, en particulier lors des variations rapides de son enveloppe temporelle (par exemple des attaques ou des extinctions pour du signal de parole lors d'une transition silence/parole). D'autre part, le filtre réducteur de bruit est mieux estimé, ce qui se traduit par un accroissement des performances de la méthode (réduction de bruit plus importante et dégradation du signal utile réduite).

Le procédé est généralisable aux cas où on effectue plus de deux passes. A partir de la p-ième fonction de transfert obtenue (p $\geq$ 2), on recalcule alors l'estimateur de niveau de signal utile, et on réévalue une (p+1)-ième fonction de transfert pour la réduction de bruit. La définition ci-dessus du procédé vaut aussi pour de tels cas où on fait P > 2 passes : il suffit de considérer que le « premier estimateur de niveau de signal utile » selon cette définition est celui obtenu au cours de la (P-1)-ième passe. En pratique, on observe de bonnes performances du procédé avec P = 2.

Dans une réalisation avantageuse du procédé, le calcul du spectre comporte une pondération de la trame de signal d'entrée par une fonction de fenêtrage et une transformation de la trame pondérée vers le domaine fréquentiel, la fonction de fenêtrage étant dissymétrique de manière à appliquer une pondération plus forte à la moitié la plus récente de la trame qu'à la moitié la moins récente de la trame.

Le choix d'une telle fonction de fenêtrage permet de concentrer le poids de l'estimation spectrale vers les échantillons les plus récents tout en permettant une fenêtre ayant de bonnes propriétés spectrales (remontée contrôlée des lobes secondaires). Ceci permet de suivre rapidement les variations du signal. Il est à noter que ce mode de calcul du spectre pour l'analyse en fréquence est également applicable lorsque l'estimation de la fonction de transfert du filtre réducteur de bruit est réalisée en une seule passe.

Le procédé est utilisable lorsque le filtrage du signal d'entrée est effectué par blocs dans le domaine fréquentiel, par les méthodes précitées d'atténuation spectrale à court terme. Le signal débruité est alors produit sous la forme de ses composantes spectrales $\hat{S}$(k,f), qui peuvent être exploitées directement (par exemple dans une application de codage ou de reconnaissance de la parole) ou transformées vers le domaine temporel pour obtenir explicitement le signal $\hat{s}$(n).

Toutefois, dans une réalisation préférée du procédé, on détermine une réponse impulsionnelle de filtre réducteur de bruit pour la trame courante à partir d'une transformation vers le domaine temporel de la fonction de transfert du second filtre réducteur de bruit, et on réalise l'opération de filtrage de la trame dans le domaine temporel au moyen de la réponse impulsionnelle déterminée pour ladite trame.

Avantageusement, la détermination de la réponse impulsionnelle de filtre réducteur de bruit pour la trame courante comporte alors les étapes suivantes :

- transformer vers le domaine temporel la fonction de transfert du second filtre réducteur de bruit pour obtenir une première réponse impulsionnelle ; et

- tronquer la première réponse impulsionnelle à une longueur de troncature correspondant à un nombre d'échantillons sensiblement plus petit (typiquement au moins cinq fois plus petit) que le nombre de points de la transformation vers le domaine temporel.

Cette limitation du support temporel du filtre réducteur de bruit présente un double avantage. D'une part elle permet d'éviter les problèmes de repliement temporel (respect de la convolution linéaire). D'autre part, elle assure un lissage permettant d'éviter les effets d'un filtre trop agressif, qui pourraient dégrader le signal utile. Elle peut être accompagnée d'une pondération de la réponse impulsionnelle tronquée par une fonction de fenêtrage sur un nombre d'échantillons correspondant à la longueur de troncature. Il est à noter que cette limitation du support temporel du filtre est également applicable lorsque l'estimation de la fonction de transfert est réalisée en une seule passe.

Lorsque le filtrage est réalisé dans le domaine temporel, il est avantageux de subdiviser la trame courante en plusieurs sous-trames et de calculer pour chaque sous-trame une réponse impulsionnelle interpolée à partir de la réponse impulsionnelle de filtre réducteur de bruit déterminée pour la trame courante et de la réponse impulsionnelle de filtre réducteur de bruit déterminée pour au moins une trame précédente. L'opération de filtrage de la trame comporte alors un filtrage du signal de chaque sous-trame dans le domaine temporel conformément à la réponse impulsionnelle interpolée calculée pour ladite sous-trame.

Ce traitement en sous-trames permet d'appliquer un filtre réducteur de bruit variant au sein d'une même trame, et donc bien adapté aux non-stationnarités du signal traité. Dans le cas du traitement d'un signal vocal, ceci se rencontre en particulier sur les trames mixtes, c'est-à-dire présentant des sons voisés et non-voisés. Il est à noter que ce traitement en sous-trames est également applicable lorsque l'estimation de la fonction de transfert du filtre est réalisée en une seule passe.

Un autre aspect de la présente invention se rapporte à un dispositif selon la revendication 10 de réduction de bruit adapté à la mise en oeuvre du procédé ci-dessus.

D'autres particularités et avantages de la présente invention apparaîtront dans la description ci-après d'exemples de réalisation non limitatifs, en référence aux dessins annexés, dans lesquels :

- la figure 1 est un schéma synoptique d'un dispositif de réduction de bruit apte à la mise en oeuvre du procédé selon l'invention ;
- la figure 2 est un schéma synoptique d'une unité d'estimation de la fonction de transfert d'un filtre réducteur de bruit utilisable dans un dispositif selon la figure 1 ;
- la figure 3 est un schéma synoptique d'une unité de filtrage temporel utilisable dans un dispositif selon la figure 1 ; et
- la figure 4 est un graphique d'une fonction de fenêtrage utilisable dans une réalisation particulière du procédé.

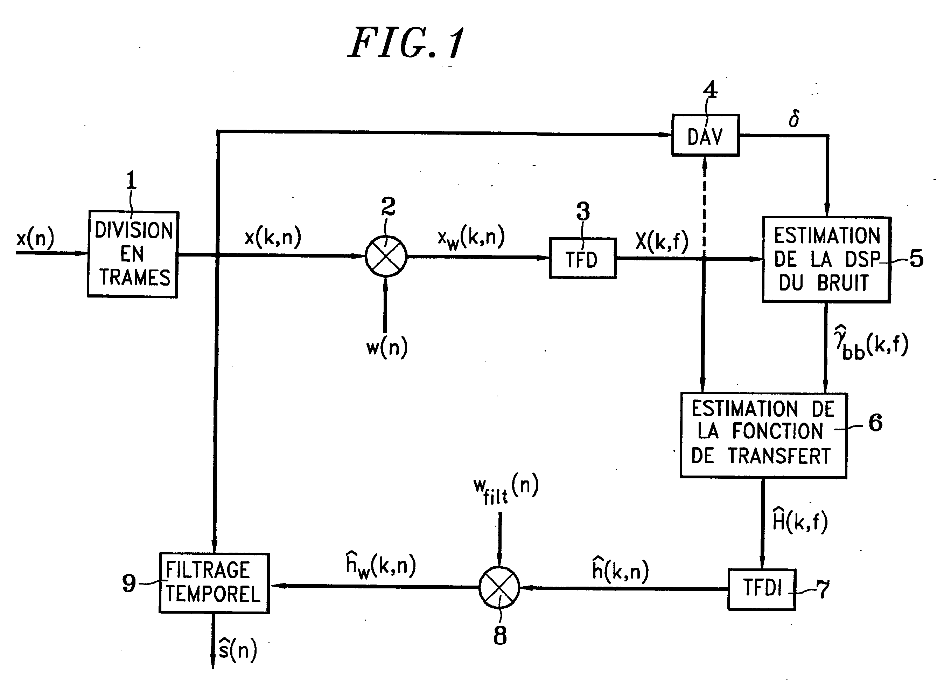

Les figures 1 à 3 donnent une représentation d'un dispositif selon l'invention sous la forme d'unités distinctes. Dans une implémentation typique du procédé, les opérations de traitement de signal sont effectuées, comme il est usuel, par un processeur de signal numérique exécutant des programmes dont les différents modules fonctionnels correspondent aux unités précitées.

En référence à la figure 1, un dispositif de réduction de bruit selon l'invention comporte une unité 1 qui distribue le signal entrée x(n), tel qu'un signal audio numérique, en trames successives de longueur L échantillons (indexées par un entier k). Chaque trame d'indice k est pondérée (multiplieur 2) en la multipliant par une fonction de fenêtrage w(n), ce qui produit le signal $x_w(k,n) = w(n).x(k,n)$ pour $0 \leq n < L$.

Le passage dans le domaine fréquentiel est réalisé en appliquant la transformée de Fourier discrète (TFD) aux trames pondérées $x_w(k,n)$ au moyen d'une unité 3 qui délivre la transformée de Fourier X(k,f) de la trame courante.

Pour les passages dans les domaines temps-fréquence et vice-versa mis en jeu dans l'invention, la TFD et la transformée inverse vers le domaine temporel (TFDI) utilisée en aval le cas échéant (unité 7) sont avantageusement une transformée de Fourier rapide (ou FFT, « Fast Fourier Transform ») et transformée de Fourier inverse rapide (ou IFFT, « Inverse Fast Fourier Transform »), respectivement. D'autres transformations temps-fréquence, telles que la transformée en ondelettes, sont également utilisables.

Une unité 4 de détection d'activité vocale (DAV) permet de discriminer les trames de bruit seul et les trames de parole, et délivre une indication binaire d'activité vocale δ pour la trame courante. Toute méthode connue de DAV est utilisable, qu'elle opère dans le domaine temporel sur la base du signal x(k,n) ou, comme indiqué en trait interrompu, dans le domaine fréquentiel sur la base du signal X(k,f).

La DAV contrôle l'estimation de la DSP du bruit par l'unité 5. Ainsi, pour chaque trame $k_b$ de "bruit seul" détectée par l'unité 4 (δ = 0), la densité spectrale de puissance de bruit $\hat{\gamma}_{bb}(k_b,f)$ est estimée par l'expression récursive suivante :

$$\begin{cases} \hat{\gamma}'_{bb}(k_b,f) = \alpha(k_b).\hat{\gamma}_{bb}(k_b-1,f) + \left(1 - \alpha(k_b)\right)\left|X(k_b,f)\right|^2 \\ \hat{\gamma}_{bb}(k,f) = \hat{\gamma}_{bb}(k_b,f) \end{cases} \qquad (10)$$

où $k_b$ est soit la trame de bruit courante si $\delta = 0$, soit la dernière trame de bruit si $\delta = 1$ (k est détectée comme trame de signal utile), et $\alpha(k_b)$ est un paramètre de lissage pouvant varier au cours du temps.

On notera que le mode de calcul de $\hat{\gamma}_{bb}(k_b,f)$ n'est pas limité à cet estimateur à lissage exponentiel, tout autre estimateur de DSP pouvant être utilisé par l'unité 5.

A partir du spectre X(k,f) de la trame courante et de l'estimation de niveau de bruit $\hat{\gamma}_{bb}(k_b,f)$, une autre unité 6 estime la fonction de transfert (FT) du filtre réducteur de bruit $\hat{H}(k,f)$. L'unité 7 applique la TFDI à cette FT pour obtenir la réponse impulsionnelle correspondante $\hat{h}(k, n)$.

Une fonction de fenêtrage $w_{filt}(n)$ est appliquée à cette réponse impulsionnelle $\hat{h}(k, n)$ par un multiplieur 8 afin d'obtenir la réponse impulsionnelle $\hat{h}_w(k, n)$ du filtre temporel du dispositif de réduction de bruit. L'opération effectuée par l'unité de filtrage 9 pour produire le signal temporel débruité $\hat{s}(n)$ est, dans son principe, une convolution du signal d'entrée par la réponse impulsionnelle $\hat{h}_w(k, n)$ déterminée pour la trame courante.

La fonction de fenêtrage $w_{filt}(n)$ a un support nettement plus court que la longueur d'une trame. En d'autres termes, la réponse impulsionnelle $\hat{h}(k, n)$ résultant de la TFDI est tronquée avant de lui appliquer la pondération par la fonction $w_{filt}(n)$. De préférence, la longueur de troncature $L_{filt}$, exprimée en nombre d'échantillons, est au moins cinq fois plus petite que la longueur de la trame. Elle est typiquement de l'ordre de grandeur du dixième de cette longueur de trame.

Les $L_{filt}$ coefficients les plus significatifs de la réponse impulsionnelle font l'objet de la pondération par la fenêtre $w_{filt}(n)$, qui est par exemple une fenêtre de Hamming ou de Hanning de longueur $L_{filt}$ :

$$\hat{h}_w(k, n) = w_{filt}(n).\hat{h}(k, n) \quad \text{pour } 0 \le n < L_{filt} \qquad (11)$$

La limitation du support temporel du filtre réducteur de bruit permet d'éviter les problèmes de repliement temporel, afin de respecter la convolution linéaire. Elle assure en outre un lissage permettant d'éviter les effets d'un filtre trop agressif qui pourraient dégrader le signal utile.

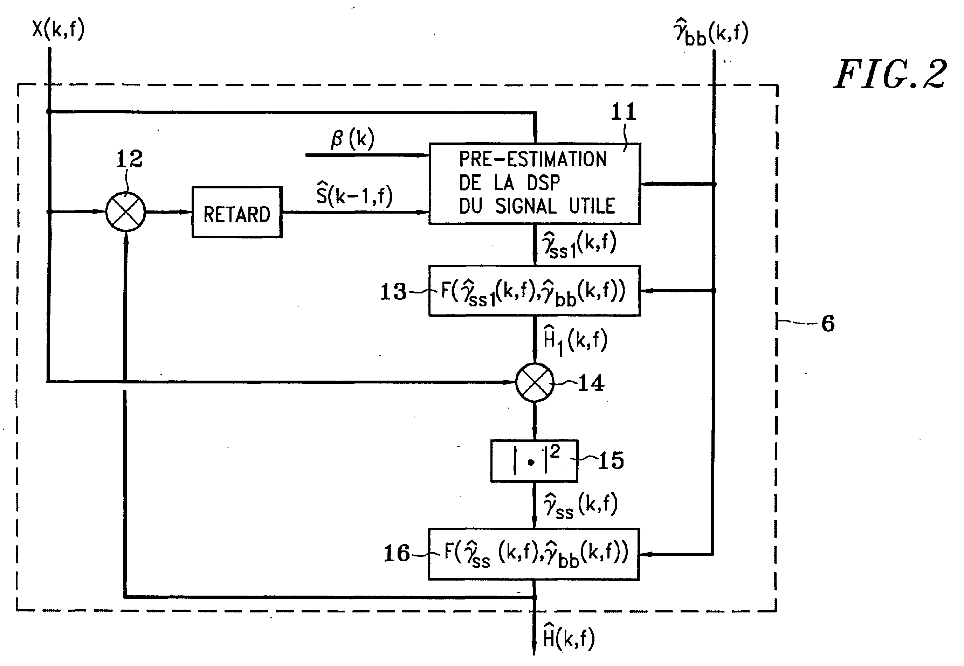

La figure 2 illustre une organisation préférée de l'unité 6 d'estimation de la fonction de transfert $\hat{H}(k,f)$ du filtre réducteur de bruit, qui dépend de la DSP du bruit b(n) et de celle du signal utile s(n).

On a décrit comment l'unité 5 peut estimer la DSP du bruit $\hat{\gamma}_{bb}(k,f)$. Mais la DSP $\gamma_{ss}(k,f)$ du signal utile ne peut être obtenue directement du fait du mélange du signal et du bruit pendant les périodes d'activité vocale. Pour la pré-estimer, le module 11 de l'unité 6 de la figure 2 utilise par exemple un estimateur à décision dirigée (voir Y. Ephraim, D. Malha, "Speech enhancement using a minimum mean square error short-time spectral amplitude estimator", IEEE Trans. on ASSP, vol. 32, N° 6, pp. 1109-1121, 1984), conformément à l'expression suivante :

$$\hat{\gamma}_{ss1}(k,f) = \beta(k)\left|\hat{S}(k-1,f)\right|^2 + \left(1 - \beta(k)\right)P\left[\left|X(k,f)\right|^2 - \hat{\gamma}_{bb}(k,f)\right] \qquad (12)$$

où $\beta(k)$ est un paramètre barycentrique pouvant varier au cours du temps et $\hat{S}(k-1,f)$ est le spectre du signal utile estimé relativement à la trame précédente d'indice k-1 (par exemple $\hat{S}(k-1,f) = \hat{H}(k-1,f).X(k-1,f)$, obtenu par le multiplieur 12 de la figure 2). La fonction P assure le seuillage de la grandeur $|X(k,f)|^2-\hat{\gamma}_{bb}(k,f)$ qui risque d'être négative en cas d'erreur d'estimation. Elle est donnée par :

$$P\big[z(k,f)\big] = \begin{cases} z(k,f) & \text{si } z(k,f) > 0 \\ \hat{\gamma}_{bb}(k,f) & \text{sinon} \end{cases} \qquad (13)$$

Il est à noter que le calcul de $\hat{\gamma}_{ss1}(k,f)$ n'est pas limité à cet estimateur à décision dirigée. En effet un estimateur à lissage exponentiel ou tout autre estimateur de densité spectrale de puissance peut-être utilisé.

Une pré-estimation de la FT du filtre réducteur de bruit pour la trame courante est calculée par le module 13, comme une fonction des DSP estimées $\hat{\gamma}_{ss1}(k,f)$ et $\hat{\gamma}_{bb}(k,f)$ :

$$\hat{H}_1(k,f) = F\big(\hat{\gamma}_{ss1}(k,f), \hat{\gamma}_{bb}(k,f)\big) \qquad (14)$$

Ce module 13 peut notamment mettre en oeuvre la règle de soustraction spectrale en puissance

$\left(F(y,z) = \sqrt{\dfrac{y}{y+z}}\right.$, selon (3)), en amplitude $\left(F(y,z) = 1 - \sqrt{\dfrac{z}{y+z}}\right.$, selon (4)), ou encore celle du filtre de Wiener en boucle ouverte $\left(F(y,z) = \dfrac{y}{y+z}\right.$, selon (5)).

Habituellement, la fonction de transfert finale du filtre réducteur de bruit est obtenue par l'équation (14). Pour améliorer les performances du filtre, on propose de l'estimer par une procédure itérative en deux passes. La première passe consiste en les opérations effectuées par les modules 11 à 13.

La fonction de transfert $\hat{H}_1(k,f)$ ainsi obtenue est réutilisée pour affiner l'estimation de la DSP du signal utile. L'unité 6 (multiplieur 14 et module 15) calcule pour cela la grandeur $\hat{\gamma}_{ss}(k,f)$ donnée par :

$$\hat{\gamma}_{ss}(k,f) = \left|\hat{H}_1(k,f).X(k,f)\right|^2 \qquad (15)$$

La deuxième passe consiste alors pour le module 16 à calculer l'estimateur final H(k,f) de la fonction de transfert du filtre réducteur de bruit à partir de l'estimation affinée de la DSP du signal utile :

$$\hat{H}(k,f) = F\big(\hat{\gamma}_{ss}(k,f), \hat{\gamma}_{bb}(k,f)\big) \qquad (16)$$

la fonction F pouvant être la même que celle employée par le module 13.

Ce calcul en deux passes permet une mise à jour plus rapide de la DSP du signal utile $\gamma_{ss}(k,f)$ et une meilleure estimation du filtre.

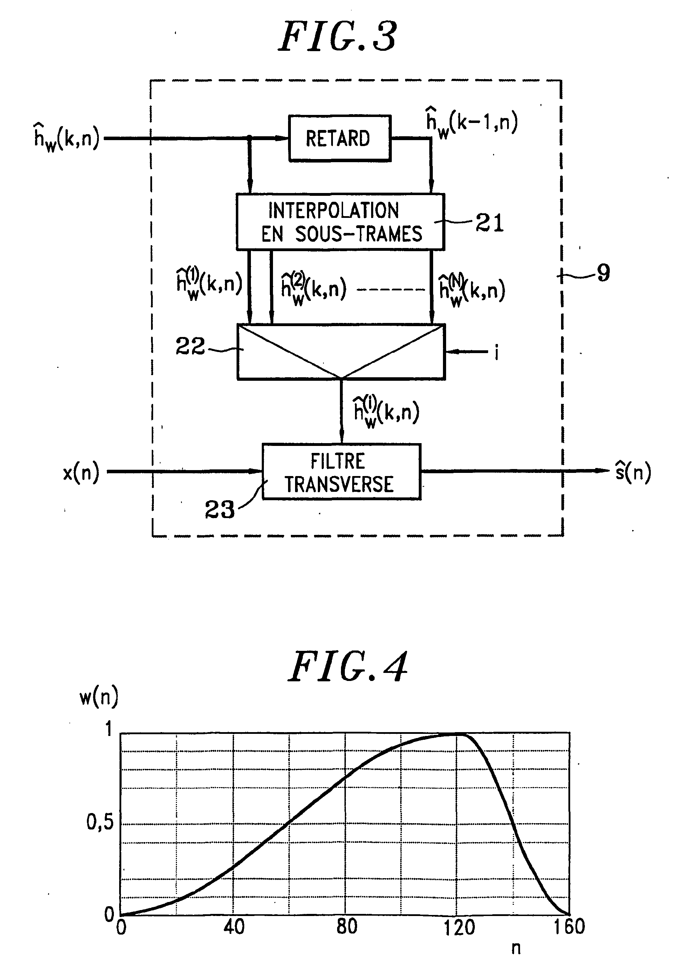

La figure 3 illustre une organisation préférée de l'unité de filtrage temporel 9, fondée sur une subdivision de la trame courante en N sous-trames et permettant ainsi d'appliquer une fonction de réduction de bruit capable d'évoluer au sein d'une même trame de signal.

Un module 21 effectue une interpolation de la réponse impulsionnelle tronquée et pondérée $\hat{h}_w(k,n)$ afin d'obtenir un jeu de $N \geq 2$ réponses impulsionnelles de filtres de sous-trames $\hat{h}_w^{(i)}(k,n)$ pour i allant de 1 à N.

Le filtrage en sous-trame peut être implémenté à l'aide d'un filtre transverse 23 de longueur $L_{filt}$ dont les coefficients $\hat{h}_w^{(i)}(k,n)$ ($0 \leq n < L_{filt}$, $1 \leq 1 \leq N$) sont présentés en cascade par le sélecteur 22 sur la base de l'index i de la sous-trame courante. Les sous-trames du signal à filtrer sont obtenues par une subdivision de la trame d'entrée x(k,n). Le filtre transverse 23 calcule ainsi le signal à bruit réduit $\hat{s}(n)$ par convolution du signal d'entrée x(n) avec les coefficients $\hat{h}_w^{(i)}(k,n)$ relatifs à la sous-trame courante.

Les réponses $\hat{h}_w^{(i)}(k,n)$ des filtres de sous-trames peuvent être calculées par le module 21 comme des sommes pondérées de la réponse impulsionnelle $\hat{h}_w(k,n)$ déterminée pour la trame courante et de celle $\hat{h}_w(k-1,n)$ déterminée pour la trame précédente. Lorsque les sous-trames correspondent à un découpage régulier de la trame, la fonction de mélange pondéré peut notamment être :

$$\hat{h}_w^{(i)}(k, n) = \left(\frac{N - i}{N}\right)\hat{h}_w(k-1, n) + \left(\frac{i}{N}\right)\hat{h}_w(k, n) \qquad (17)$$

On remarquera que le cas où l'on applique directement le filtre $\hat{h}_w(k, n)$ correspond à N = 1 (pas de sous-trames).

Exemple 1

Cet exemple de dispositif est adapté à une application à la communication parlée, notamment en pré-traitement d'un codeur de parole à bas débit.

On utilise des fenêtres non-recouvrantes pour réduire au maximum théorique le retard introduit par le traitement tout en offrant la possibilité à l'utilisateur de choisir un fenêtrage adapté à l'application. Ceci est possible puisque le fenêtrage du signal d'entrée du dispositif n'est pas soumis à une contrainte de reconstruction parfaite.

Dans une telle application, la fonction de fenêtrage w(n) appliquée par le multiplieur 2 est avantageusement dissymétrique afin de réaliser une pondération plus forte sur la moitié la plus récente de la trame que sur la moitié la moins récente.

Comme illustré par la figure 4, la fenêtre d'analyse dissymétrique w(n) peut être construite à l'aide de deux demi-fenêtres de Hanning de tailles différentes $L_1$ et $L_2$ :

$$w(n) = \begin{cases} 0{,}5 - 0{,}5 \cdot \cos\left(\dfrac{\pi n}{L_1}\right) & \text{pour } 0 \le n < L_1 \\ 0{,}5 + 0{,}5 \cdot \cos\left(\dfrac{\pi(n - L_1 + 1)}{L_2}\right) & \text{pour } L_1 \le n < L_1 + L_2 = L \end{cases} \qquad (18)$$

Beaucoup de codeurs de parole pour les mobiles utilisent des trames de longueur 20 ms et fonctionnent à la fréquence d'échantillonnage $F_e$ = 8 kHz (soit 160 échantillons par trame). Dans l'exemple représenté sur la figure 4, on a choisi L = 160, $L_1$ = 120 et $L_2$ = 40.

Le choix d'une telle fenêtre permet de concentrer le poids de l'estimation spectrale vers les échantillons les plus récents, tout en garantissant une bonne fenêtre spectrale. La méthode proposée permet un tel choix du fait que l'on n'a aucune contrainte de reconstruction parfaite du signal à la synthèse (signal reconstruit en sortie par filtrage temporel).

Pour avoir une meilleure résolution fréquentielle, les unités 3 et 7 utilisent une FFT de longueur $L_{FFT}$ = 256. Ce choix est également motivé car la FFT est numériquement optimale lorsqu'elle s'applique sur des trames de longueur en puissance de 2. Il est donc nécessaire au préalable de prolonger le bloc fenêtre $x_w(k,n)$ par $L_{FFT}$ - L = 96 échantillons nuls (« zero-padding ») :

$$x_w(k,n) = 0 \quad \text{pour } L \le n < L_{FFT} \qquad (19)$$

La détection d'activité vocale utilisée dans cet exemple est une méthode classique basée sur des comparaisons d'énergies à court terme et à long terme du signal. La mise à jour de l'estimation de la densité spectrale de puissance de bruit $\hat{\gamma}_{bb}(k,f)$ est réalisée par estimation à lissage exponentiel, conformément à l'expression (10) avec $\alpha(k_b)$ = 0,8553, correspondant à une constante de temps de 128 ms, jugée suffisante pour assurer un compromis entre une estimation fiable et un suivi des variations temporelles de la statistique du bruit. La FT du filtre de réduction de bruit $H_1(k,f)$ est pré-estimée conformément à la formule (5) (filtre de Wiener en boucle ouverte), après avoir pré-estimé la DSP du signal utile selon l'estimateur à décision-dirigée défini en (12) avec $\beta(k)$ = 0,98. La même fonction F est réutilisée par le module 16 pour produire l'estimation finale $\hat{H}(k,f)$ de la FT.

Du fait que la FT H(k,f) est à valeurs réelles, le filtre temporel est rendu causal par :

$$\begin{cases} \hat{h}_{caus}(k, n) = \hat{h}(k, n + L/2) & \text{pour } 0 \le n < L/2 \\ \hat{h}_{caus}(k, n) = \hat{h}(k, n - L/2) & \text{pour } L/2 \le n < L \end{cases} \qquad (20)$$

On sélectionne ensuite les $L_{filt}$ = 21 coefficients de ce filtre, qu'on pondère par une fenêtre de Hanning $w_{filt}(n)$ de longueur $L_{filt}$, valeur correspondant aux échantillons significatifs pour cette application :

$$\hat{h}_w(k, n) = w_{filt}(n).\hat{h}_{caus}\left(k, n+\frac{L}{2} - \frac{L_{filt}-1}{2}\right) \quad \text{pour } 0 \leq n < L_{filt} \qquad (21)$$

avec :

$$w_{filt}(n) = 0,5 - 0,5.\cos\left(\frac{2\pi n}{L_{filt}-1}\right) \quad \text{pour } 0 \leq n < L_{filt} \qquad (22)$$

Le filtrage temporel est réalisé par N = 4 filtres de sous-trames $\hat{h}_w^{(i)}(k, n)$ obtenus par les fonctions de mélange pondéré données par (17). Ces quatre filtres sont ensuite appliqués à l'aide d'un filtrage transverse de longueur $L_{filt}$ = 21 aux quatre sous-trames du signal d'entrée $x^{(i)}(k,n)$, celles-ci étant obtenues par une extraction contiguë de quatre sous-trames de taille L/4 = 40 échantillons du signal d'observation $x(k,n)$ :

$$x^{(i)}(k,n) = x(k,n) \quad \text{pour } (i-1).L/N \leq n < i.L/N \qquad (22)$$

Exemple 2

Cet exemple de dispositif est adapté à une application à la reconnaissance de parole robuste (dans un environnement bruité).

Dans cet exemple, on utilise des trames d'analyse de longueur L qui présentent des recouvrements mutuels de L/2 échatillons entre deux trames successives, et la fenêtre utilisée est de type Hanning :

$$w(n) = 0,5 - 0,5.\cos\left(\frac{2\pi n}{L-1}\right) \quad \text{pour } 0 \leq n < L \qquad (23)$$

La longueur des trames est fixée à 20 ms, soit L = 160 à la fréquence d'échantillonnage $F_e$ = 8 kHz, et les trames sont complétées par 96 échantillons nuls (« zero-padding ») pour la FFT.

Dans cet exemple, le calcul de la FT du filtre réducteur de bruit est basé sur un rapport de racines carrées des densités spectrales de puissance du bruit $\hat{\gamma}_{bb}(k,f)$ et du signal utile $\hat{\gamma}_{ss}(k,f)$, et par conséquent sur les modules de l'estimée du bruit $\left|\hat{B}(k,f)\right| = \sqrt{\hat{\gamma}_{bb}(k,f)}$ et du signal utile $\left|\hat{S}(k,f)\right| = \sqrt{\hat{\gamma}_{ss}(k,f)}$.

La détection d'activité vocale utilisée dans cet exemple est une méthode classique existante basée sur des comparaisons d'énergies à court terme et à long terme du signal. La mise à jour de l'estimation du module du signal de bruit $\left|\hat{B}(k,f)\right| = \sqrt{\hat{\gamma}_{bb}(k,f)}$ est réalisée par estimation à lissage exponentiel :

$$\begin{cases} \left|\hat{B}(k_b,f)\right| = \alpha.\left|\hat{B}(k_b-1,f)\right| + (1-\alpha).\left|X(k_b,f)\right| \\ \left|\hat{B}(k,f)\right| = \left|\hat{B}(k_b,f)\right| \end{cases} \qquad (24)$$

où $k_b$ est la trame de bruit courante ou la dernière trame de bruit (si k est détectée comme trame de signal utile). La grandeur de lissage $\alpha$ est choisie constante et égale à 0,99, soit une constante de temps de 1,6 s.

La FT du filtre de réduction de bruit $\hat{H}_1(k,f)$ est pré-estimée par le module 13 selon :

$$\hat{H}_1(k,f) = F\left(\left|\hat{S}(k,f)\right|, \left|\hat{B}(k,f)\right|\right) \qquad (25)$$

avec:

$$F(y,z) = \frac{y}{y+z} \qquad (26)$$

Le fait de calculer une racine carrée permet d'effectuer des estimations sur les modules, qui sont liés au RSB $\eta(k,f)$ par :

$$\eta(k,f) = \frac{\left|\hat{S}(k,f)\right|^2}{\left|\hat{B}(k,f)\right|^2} \qquad (27)$$

L'estimateur du signal utile en module $|\hat{S}(k,f)|$ est obtenu par :

$$\left|\hat{S}(k,f)\right| = \beta.\left|\hat{S}(k-1,f)\right|^2 + (1-\beta).P\left[\left|X(k,f)\right| - \left|\hat{B}(k,f)\right|\right] \qquad (28)$$

avec $\beta(k) = 0,98$.

Le multiplieur 14 fait le produit de la FT pré-estimée $\hat{H}_1(k,f)$ par le spectre X(k,f), et le module du résultat (et non son carré) est obtenu en 15 pour fournir l'estimation affinée de $|\hat{S}(k,f)|$, à partir de laquelle le module 16 produit l'estimation finale $\hat{H}(k,f)$ de la FT en utilisant la même fonction F que dans (25).

La réponse temporelle $\hat{h}_w(k, n)$ est ensuite obtenue exactement de la même manière que dans l'exemple 1 (passage en domaine temporel, restitution de la causalité, sélection des échantillons significatifs et fenêtrage). La seule différence réside dans le choix du nombre de coefficients sélectionné $L_{filt}$, qui est fixé à $L_{filt}$ = 17 dans cet exemple.

Le filtrage de la trame d'entrée x(k,n) est réalisé en lui appliquant directement la réponse temporelle du filtre de réduction de bruit obtenue $\hat{h}_w(k, n)$. Ne pas faire de filtrage en sous-trames revient à prendre N = 1 dans l'expression (17).

## Revendications

**1.** Procédé de réduction de bruit dans des trames successives d'un signal d'entrée x(n), comprenant les étapes suivantes pour certaines au moins des trames:

- calculer un spectre X(k,f) du signal d'entrée par transformation dans le domaine fréquentiel ;
- obtenir un estimateur de niveau de bruit $\hat{\gamma}_{bb}(k,f)$ du spectre X(k,f) en fonction de la fréquence ;
- calculer un premier estimateur de niveau de signal utile $\hat{\gamma}_{ss1}(k,f)$ dans la trame en fonction de la fréquence ;
- calculer la fonction de transfert $\hat{H}_1(k,f)$ d'un premier filtre réducteur de bruit sur la base du premier estimateur de niveau de signal utile $\hat{\gamma}_{ss1}(k,f)$ et de l'estimateur de niveau de bruit $\hat{\gamma}_{bb}(k,f)$ ;
- calculer un second estimateur de niveau de signal utile $\hat{\gamma}_{ss}(k,f)$ ans la trame en fonction de la fréquence, en combinant le spectre X(k,f) du signal d'entrée et la fonction de transfert $\hat{H}_1(k,f)$ du premier filtre réducteur de bruit ;
- calculer la fonction de transfert $\hat{H}(k,f)$ d'un second filtre réducteur de bruit sur la base du second estimateur de niveau de signal utile $\hat{\gamma}_{ss}(k,f)$ et de l'estimateur de niveau de bruit $\hat{\gamma}_{bb}(k,f)$ ; et
- utiliser la fonction de transfert $\hat{H}(k,f)$ du second filtre réducteur de bruit dans une opération de filtrage de la trame pour produire un signal à bruit réduit.

2. Procédé selon la revendication 1, dans lequel le calcul du spectre $X(k,f)$ comporte une pondération de la trame de signal d'entrée par une fonction de fenêtrage $w(n)$ et une transformation de la trame pondérée vers le domaine fréquentiel, la fonction de fenêtrage étant dissymétrique de manière à appliquer une pondération plus forte à la moitié la plus récente de la trame qu'à la moitié la moins récente de la trame.

3. Procédé selon la revendication 1 ou 2, dans lequel on détermine une réponse impulsionnelle de filtre réducteur de bruit $\hat{h}_w(k, n)$ pour la trame courante à partir d'une transformation vers le domaine temporel de la fonction de transfert $\hat{H}(k,f)$ du second filtre réducteur de bruit, et on réalise l'opération de filtrage de la trame dans le domaine temporel au moyen de la réponse impulsionnelle déterminée pour ladite trame.

4. Procédé selon la revendication 3, dans lequel la détermination de la réponse impulsionnelle de filtre réducteur de bruit $\hat{h}_w(k, n)$ pour la trame courante comporte les étapes suivantes :

   - transformer vers le domaine temporel la fonction de transfert $\hat{H}(k,f)$ du second filtre réducteur de bruit pour obtenir une première réponse impulsionnelle ; et
   - tronquer la première réponse impulsionnelle à une longueur de troncature correspondant à un nombre d'échantillons sensiblement plus petit que le nombre de points de la transformation vers le domaine temporel.

5. Procédé selon la revendication 4, dans lequel la détermination de la réponse impulsionnelle de filtre réducteur de bruit $\hat{h}_w(k, n)$ pour la trame courante comporte en outre l'étape suivante :

   - pondérer la réponse impulsionnelle tronquée par une fonction de fenêtrage $w_{filt}(n)$ sur un nombre d'échantillons correspondant à ladite longueur de troncature.

6. Procédé selon l'une quelconque des revendications 3 à 5, dans lequel on subdivise la trame courante en plusieurs sous-trames et on calcule pour chaque sous-trame une réponse impulsionnelle interpolée $\hat{h}_w^{(i)}(k, n)$ à partir de la réponse impulsionnelle de filtre réducteur de bruit déterminée pour la trame courante et de la réponse impulsionnelle de filtre réducteur de bruit déterminée pour au moins une trame précédente, et dans lequel l'opération de filtrage de la trame comporte un filtrage du signal de chaque sous-trame dans le domaine temporel conformément à la réponse impulsionnelle interpolée calculée pour ladite sous-trame.

7. Procédé selon la revendication 6, dans lequel les réponses impulsionnelles interpolées $\hat{h}_w^{(i)}(k, n)$ sont calculées pour les différentes sous-trames de la trame courante comme des sommes pondérées de la réponse impulsionnelle de filtre réducteur de bruit $\hat{h}_w(k, n)$ déterminée pour la trame courante et de la réponse impulsionnelle de filtre réducteur de bruit $\hat{h}_w(k-1, n)$ déterminée pour la trame précédente.

8. Procédé selon la revendication 7, dans lequel la réponse impulsionnelle interpolée $\hat{h}_w^{(i)}(k, n)$ calculée pour la i-ième sous-trame de la trame courante ($1 \leq i \leq N$) est égale à $(N-i)/N$ fois la réponse impulsionnelle de filtre réducteur de bruit $\hat{h}_w(k-1, n)$ déterminée pour la trame précédente plus $i/N$ fois la réponse impulsionnelle de filtre réducteur de bruit $\hat{h}_w(k, n)$ déterminée pour la trame courante, N étant le nombre de sous-trames de la trame courante.

9. Procédé selon l'une quelconque des revendications précédentes, dans lequel le signal d'entrée $x(n)$ est un signal audio.

10. Dispositif de réduction de bruit dans un signal d'entrée $x(n)$, comprenant :

    - des moyens (1-3) de calcul d'un spectre $X(k,f)$ d'une trame du signal d'entrée par transformation dans le domaine fréquentiel ;
    - des moyens (5) d'obtention d'un estimateur de niveau de bruit $\hat{\gamma}_{bb}(k,f)$ du spectre $X(k,f)$ en fonction de la fréquence ;
    - des moyens (11) de calcul d'un premier estimateur de niveau de signal utile $\hat{\gamma}_{ss1}(k,f)$ dans la trame en fonction de la fréquence ;

- des moyens (13) de calcul de la fonction de transfert $\hat{H}_1(k,f)$ d'un premier filtre réducteur de bruit sur la base du premier estimateur de niveau de signal utile $\hat{\gamma}_{ss1}(k,f)$ et de l'estimateur de niveau de bruit $\hat{\gamma}_{bb}(k,f)$ ;
- des moyens (14-15) de calcul d'un second estimateur de niveau de signal utile $\hat{\gamma}_{ss}(k,f)$ dans la trame en fonction de la fréquence, en combinant le spectre X(k,f) du signal d'entrée et la fonction de transfert $\hat{H}_1(k,f)$ du premier filtre réducteur de bruit ;
- des moyens (16) de calcul de la fonction de transfert ($\hat{H}(k,f)$ d'un second filtre réducteur de bruit sur la base du second estimateur de niveau de signal utile $\hat{\gamma}_{ss}(k,f)$ et de l'estimateur de niveau de bruit $\hat{\gamma}_{bb}(k,f)$ ; et
- des moyens (7-9) de filtrage de la trame au moyen de la fonction de transfert $\hat{H}(k,f)$ du second filtre réducteur de bruit pour produire un signal à bruit réduit.

**11.** Dispositif selon la revendication 10, dans lequel les moyens de calcul de spectre comprennent des moyens (2) de pondération de la trame de signal d'entrée (x(n) par une fonction de fenêtrage w(n) et des moyens (3) de transformation de la trame pondérée vers le domaine fréquentiel, la fonction de fenêtrage étant dissymétrique de manière à appliquer une pondération plus forte à la moitié la plus récente de la trame qu'à la moitié la moins récente de la trame.

**12.** Dispositif selon la revendication 10 ou 11, comprenant des moyens (7-8) de détermination d'une réponse impulsionnelle de filtre réducteur de bruit $\hat{h}_w(k, n)$ pour la trame courante à partir d'une transformation vers le domaine temporel de la fonction de transfert $\hat{H}(k,f)$ du second filtre réducteur de bruit, dans lequel les moyens de filtrage (9) opèrent dans le domaine temporel au moyen de la réponse impulsionnelle déterminée pour la trame courante.

**13.** Dispositif selon la revendication 12, dans lequel les moyens de détermination de la réponse impulsionnelle de filtre réducteur de bruit $\hat{h}_w(k, n)$ comprennent des moyens (7) de transformation vers le domaine temporel de la fonction de transfert $\hat{H}(k,f)$ du second filtre réducteur de bruit, pour obtenir une première réponse impulsionnelle, et des moyens (8) de troncature de la première réponse impulsionnelle à une longueur de troncature correspondant à un nombre d'échantillons sensiblement plus petit que le nombre de points de la transformation vers le domaine temporel.

**14.** Dispositif selon la revendication 13, dans lequel les moyens de détermination de la réponse impulsionnelle de filtre réducteur de bruit comprennent des moyens (8) de pondération de la réponse impulsionnelle tronquée par une fonction de fenêtrage $w_{filt}(n)$ sur un nombre d'échantillons correspondant à ladite longueur de troncature.

**15.** Dispositif selon l'une quelconque des revendications 12 à 14, comprenant des moyens pour subdiviser la trame courante en plusieurs sous-trames et des moyens (21) de calcul d'une réponse impulsionnelle interpolée

$\hat{h}_w^{(i)}(k, n)$ pour chaque sous-trame à partir de la réponse impulsionnelle de filtre réducteur de bruit $\hat{h}_w(k, n)$ déterminée pour la trame courante et de la réponse impulsionnelle de filtre réducteur de bruit déterminée pour au moins une trame précédente, dans lequel les moyens de filtrage (9) comprennent un filtre (23) pour filtrer le signal de chaque sous-trame dans le domaine temporel conformément à la réponse impulsionnelle interpolée calculée pour ladite sous-trame.

**16.** Dispositif selon la revendication 15, dans lequel les moyens de calcul de réponse impulsionnelle interpolée sont agencés pour calculer les réponses impulsionnelles interpolées $\hat{h}_w^{(i)}(k, n)$ pour les différentes sous-trames de la trame courante comme des sommes pondérées de la réponse impulsionnelle de filtre réducteur de bruit $\hat{h}_w(k, n)$ déterminée pour la trame courante et de la réponse impulsionnelle de filtre réducteur de bruit $\hat{h}_w(k-1, n)$ déterminée pour la trame précédente.

**17.** Dispositif selon la revendication 16, dans lequel la réponse impulsionnelle interpolée $\hat{h}_w^{(i)}(k, n)$ calculée pour la i-ième sous-trame de la trame courante ($1 \le i \le N$) est égale à (N-i)/N fois la réponse impulsionnelle de filtre réducteur de bruit $\hat{h}_w(k-1, n)$ déterminée pour la trame précédente plus i/N fois la réponse impulsionnelle de filtre réducteur de bruit $\hat{h}_w(k, n)$ déterminée pour la trame courante, N étant le nombre de sous-trames de la trame courante.

**18.** Dispositif selon l'une quelconque des revendications 10 à 17, dans lequel le signal d'entrée x(n) est un signal audio.

**Claims**

1. Method for reducing noise in successive frames of an input signal x(n), comprising the following steps for at least some of the frames:

   - calculating a spectrum X(k,f)) of the input signal by transformation to the frequency domain;
   - obtaining a noise level estimator $\hat{y}_{bb}(k, f)$ from the spectrum X(k, f) as a function of the frequency;
   - calculating a first useful signal level estimator $\hat{y}_{ss1}(k, f)$ in the frame as a function of the frequency;
   - calculating the transfer function $\hat{H}_1(k,f)$ of a first noise-reducing filter on the basis of the first useful signal level estimator $\hat{y}_{ss1}(k, f)$ and of the noise level estimator $\hat{y}_{bb}(k, f)$;
   - calculating a second useful signal level estimator $\hat{y}_{ss1}(k, f)$ in the frame as a function of the frequency, by combining the spectrum X(k, f) of the input signal and the transfer function $\hat{H}_1(k, f)$ of the first noise-reducing filter;
   - calculating the transfer function $\hat{H}(k,f)$ of a second noise-reducing filter on the basis of the second useful signal level estimator $\hat{y}_{ss}(k, f)$ and of the noise level estimator $\hat{y}_{bb}(k, f)$; and
   - using the transfer function $\hat{H}(k, f)$ of the second noise-reducing filter in a frame filtering operation to produce a signal with reduced noise.

2. Method according to Claim 1, in which the calculation of the spectrum X(k,f) comprises a weighting of the input signal frame by a windowing function w(n) and a transformation of the weighted frame to the frequency domain, the windowing function being dissymmetric so as to apply a stronger weighting on the more recent half of the frame than on the less recent half of the frame.

3. Method according to Claim 1 or 2, in which a noise-reducing filter impulse response $\hat{h}_w(k,n)$ is determined for the current frame based on a transformation to the time domain of the transfer function $\hat{H}(k,f)$ of the second noise-reducing filter, and the filtering operation on the frame in the time domain is carried out by means of the impulse response determined for said frame.

4. Method according to Claim 3, in which the determination of the noise-reducing filter impulse response $\hat{h}_w(k,n)$ for the current frame comprises the following steps:

   - transforming to the time domain the transfer function $\hat{H}(k,f)$ of the second noise-reducing filter to obtain a first impulse response; and
   - truncating the first impulse response to a truncation length corresponding to a number of samples substantially smaller than the number of points of the transformation to the time domain.

5. Method according to Claim 4, in which the determination of the noise-reducing filter impulse response $\hat{h}_w(k,n)$ for the current frame further comprises the following step:

   - weighting the truncated impulse response by a windowing function $w_{filt}(n)$ on a number of samples corresponding to said truncation length.

6. Method according to any one of Claims 3 to 5, in which the current frame is subdivided into several sub-frames and for each sub-frame an interpolated impulse $\hat{h}_w^{(i)}(k,n)$ response is calculated based on the noise-reducing filter impulse response determined for the current frame and on the noise-reducing filter impulse response determined for at least one previous frame, and in which the filtering operation of the frame includes a filtering of the signal of each sub-frame in the time domain in accordance with the interpolated impulse response calculated for said sub-frame.

7. Method according to Claim 6, in which the interpolated impulse responses $\hat{h}_w^{(i)}(k,n)$ are calculated for the various sub-frames of the current frame as weighted sums of the noise-reducing filter impulse response $\hat{h}_w(k,n)$ determined for the current frame and of the noise-reducing filter impulse response $\hat{h}_w(k-1,n)$ determined for the previous frame.

8. Method according to Claim 7, in which the interpolated impulse response $\hat{h}_w^{(i)}(k,n)$ calculated for the i-th sub-frame of the current frame ($1 \leq i \leq N$) is equal to (N-i)/N times the noise-reducing filter impulse response $\hat{h}_w$(k-1,n) determined for the previous frame plus i/N times the noise-reducing filter impulse response $\hat{h}_w$(k,n) determined for the current frame, N being the number of sub-frames of the current frame.

9. Method according to any one of the preceding claims, in which the input signal x(n) is an audio signal.

10. Device for reducing noise in an input signal x(n), comprising:

- means (1-3) for calculating a spectrum X(k,f) of a frame of the input signal by transformation to the frequency domain;
- means (5) for obtaining a noise level estimator $\hat{y}_{bb}$(k, f) from the spectrum X(k,f) as a function of the frequency;
- means (11) for calculating a first useful signal level estimator $\hat{y}_{ss1}$(k, f) in the frame as a function of the frequency;
- means (13) for calculating the transfer function $H_1$(k,f) of a first noise-reducing filter on the basis of the first useful signal level estimator $\hat{y}_{ss1}$(k, f) and of the noise level estimator $\hat{y}_{bb}$(k, f);
- means (14-15) for calculating a second useful signal level estimator $\hat{y}_{ss}$(k, f) in the frame as a function of the frequency, by combining the spectrum X(k, f) of the input signal and the transfer function $H_1$ (k, f) of the first noise-reducing filter;
- means (16) for calculating the transfer function $\hat{H}$(k,f) of a second noise-reducing filter on the basis of the second useful signal level estimator $\hat{y}_{ss}$(k, f) and of the noise level estimator $\hat{y}_{bb}$(k, f); and
- means (7-9) for filtering the frame by means of the transfer function $H$(k, f) of the second noise-reducing filter to produce a signal with reduced noise.

11. Device according to Claim 10, in which the spectrum calculation means comprise means (2) of weighting of the input signal frame x(n) by a windowing function w(n) and means (3) of transformation of the weighted frame to the frequency domain, the windowing function being dissymmetric so as to apply a stronger weighting to the more recent half of the frame than to the less recent half of the frame.

12. Device according to Claim 10 or 11, comprising means (7-8) for determining a noise-reducing filter impulse response $\hat{h}_w$(k,n) for the current frame based on a transformation to the time domain of the transfer function $\hat{H}$(k,f) of the second noise-reducing filter, in which device the filtering means (9) operate in the time domain by means of the impulse response determined for the current frame.

13. Device according to Claim 12, in which the means for determining the noise-reducing filter impulse response $\hat{h}_w$(k, n) comprise means (7) of transformation to the time domain of the transfer function $\hat{H}$(k,f) of the second noise-reducing filter, in order to obtain a first impulse response, and means (8) of truncation of the first impulse response to a truncation length corresponding to a number of samples substantially smaller than the number of points of the transformation to the time domain.

14. Device according to Claim 13, in which the means for determining the noise-reducing filter impulse response comprise means (8) of weighting of the truncated impulse response by a windowing function $w_{filt}$(n) on a number of samples corresponding to said truncation length.

15. Device according to any one of Claims 12 to 14, comprising means for subdividing the current frame into several sub-frames and means (21) for calculating an interpolated impulse response $\hat{h}_w^{(i)}(k,n)$ for each sub-frame based on the noise-reducing filter impulse response $\hat{h}_w$(k,n) determined for the current frame and on the noise-reducing filter impulse response determined for at least one previous frame, in which device the filtering means (9) comprise a filter (23) for filtering the signal of each sub-frame in the time domain in accordance with the interpolated impulse response calculated for said sub-frame.

16. Device according to Claim 15, in which the means for calculating the interpolated impulse response are arranged for calculating the interpolated impulse responses $\hat{h}_w^{(i)}(k,n)$ for the various sub-frames of the current frame as weighted sums of the noise-reducing filter impulse response $\hat{h}_w$(k,n) determined for the current frame and of the noise-reducing filter impulse response $\hat{h}_w$(k-1,n) determined for the previous frame.

17. Device according to Claim 16, in which the interpolated impulse response $\hat{h}^{(i)}_w(k,n)$ calculated for the i-th sub-frame of the current frame ($1 \le i \le N$) is equal to (N-i)/N times the noise-reducing filter impulse response $\hat{h}_w$(k-1,n) determined for the previous frame plus i/N times the noise-reducing filter impulse response $\hat{h}_w$(k,n) determined for the current frame, N being the number of sub-frames of the current frame.

18. Device according to any one of Claims 10 to 17, in which the input signal x(n) is an audio signal.

**Patentansprüche**

1. Verfahren zur Reduktion von Rauschen in aufeinander folgenden Rahmen eines Eingangssignals x(n) mit den folgenden Schritten zumindest für bestimmte der Rahmen:

   - Berechnen eines Spektrums X(k,f) des Eingangssignals durch Transformation im Frequenzbereich;
   - Erhalten einer Rauschpegel-Schätzfunktion $\hat{\gamma}_{bb}$(k,f) vom Spektrum X(k,f) als Funktion der Frequenz;
   - Berechnen einer ersten Schätzfunktion $\hat{\gamma}_{ss1}$(k,f) des Nutzsignalpegels im Rahmen als Funktion der Frequenz;
   - Berechnen der Übertragungsfunktion $H_1$(k,f) eines ersten Rauschreduktionsfilters auf der Basis der ersten Nutzsignalpegel-Schätzfunktion $\hat{\gamma}_{ss1}$(k,f) und der Rauschpegel-Schätzfunktion $\hat{\gamma}_{bb}$(k,f);
   - Berechnen einer zweiten Schätzfunktion $\hat{\gamma}_{ss}$(k,f) des Nutzsignalpegels im Rahmen als Funktion der Frequenz durch Kombinieren des Spektrums X(k,f) des Eingangssignals und der Übertragungsfunktion $\hat{H}_1$(k,f) des ersten Rauschreduktionsfilters;
   - Berechnen der Übertragungsfunktion $\hat{H}$(k,f) eines zweiten Rauschreduktionsfilters auf der Basis der zweiten Nutzsignalpegel-Schätzfunktion $\hat{\gamma}_{ss}$(k,f) und der Rauschpegel-Schätzfunktion $\hat{\gamma}_{bb}$(k,f); und
   - Verwenden der Übertragungsfunktion $\hat{H}$(k,f) des zweiten Rauschreduktionsfilters in einer Filteroperation des Rahmens, um ein Signal mit reduziertem Rauschen zu erzeugen.

2. Verfahren nach Anspruch 1, wobei die Berechnung des Spektrums X(k,f) eine Gewichtung des Eingangssignalrahmens durch eine Fensterfunktion w(n) und eine Transformation des gewichteten Rahmens in den Frequenzbereich aufweist, wobei die Fensterfunktion asymmetrisch ist, um auf die neueste Hälfte des Rahmens eine stärkere Gewichtung als auf die älteste Hälfte des Rahmens anzuwenden.

3. Verfahren nach Anspruch 1 oder 2, wobei eine Impulsantwort des Rauschreduktionsfilters $\hat{h}_w$(k,n) für den aktuellen Rahmen anhand einer Transformation der Übertragungsfunktion $\hat{H}$(k,f) des zweiten Rauschreduktionsfilters in den Zeitbereich bestimmt wird und die Filteroperation des Rahmens im Zeitbereich mittels der für den Rahmen bestimmten Impulsantwort ausgeführt wird.

4. Verfahren nach Anspruch 3, wobei die Bestimmung der Impulsantwort des Rauschreduktionsfilters $\hat{h}_w$(k,n) für den aktuellen Rahmen die folgenden Schritte aufweist:

   - Transformieren der Übertragungsfunktion H(k,f) des zweiten Rauschreduktionsfilters in den Zeitbereich, um eine erste Impulsantwort zu erhalten; und
   - Kürzen der ersten Impulsantwort auf eine Kürzungslänge, die einer Anzahl von Abtastwerten entspricht, die wesentlich kleiner ist als die Anzahl von Punkten der Transformation in den Zeitbereich.

5. Verfahren nach Anspruch 4, wobei die Bestimmung der Impulsantwort des Rauschreduktionsfilters $\hat{h}_w$(k,n) für den aktuellen Rahmen außerdem den folgenden Schritt aufweist:

   - Gewichten der gekürzten Impulsantwort durch eine Fensterfunktion $W_{filt}$(n) an einer Anzahl von Abtastwerten, die der Kürzungslänge entspricht.

6. Verfahren nach einem der Ansprüche 3 bis 5, wobei der aktuelle Rahmen in mehrere Unterrahmen unterteilt wird und für jeden Unterrahmen eine interpolierte Impulsantwort $\hat{h}^{(i)}_w(k,n)$ anhand der für den aktuellen Rahmen bestimmten Impulsantwort des Rauschreduktionsfilters und der für mindestens einen vorangehenden Rahmen bestimmten Impulsantwort des Rauschreduktionsfilters berechnet wird und wobei die Filteroperation des Rahmens eine Filterung des Signals jedes Unterrahmens im Zeitbereich gemäß der für den Unterrahmen berechneten interpolierten Impulsantwort aufweist.

7. Verfahren nach Anspruch 6, wobei die interpolierten Impulsantworten $\hat{h}_w^{(i)}(k,n)$ für die verschiedenen Unterrahmen des aktuellen Rahmens als gewichtete Summen der für den aktuellen Rahmen bestimmten Impulsantwort des Rauschreduktionsfilters $\hat{h}_w(k,n)$ und der für den vorangehenden Rahmen bestimmten Impulsantwort des Rauschreduktionsfilters $\hat{h}_w(k-1,n)$ berechnet werden.

8. Verfahren nach Anspruch 7, wobei die für den i-ten Unterrahmen des aktuellen Rahmens ($1 \leq i \leq N$) berechnete interpolierte Impulsantwort $\hat{h}_w^{(i)}(k,n)$ gleich (N-i)/N mal die für den vorangehenden Rahmen bestimmte Impulsantwort des Rauschreduktionsfilters $\hat{h}_w(k-1,n)$ plus i/N mal die für den aktuellen Rahmen bestimmte Impulsantwort des Rauschreduktionsfilters $\hat{h}_w(k,n)$ ist, wobei N die Anzahl von Unterrahmen des aktuellen Rahmens ist.

9. Verfahren nach einem der vorangehenden Ansprüche, wobei das Eingangssignal x(n) ein Audiosignal ist.

10. Vorrichtung zur Reduktion von Rauschen in einem Eingangssignal x(n), die aufweist:

   - Mittel (1-3) zur Berechnung eines Spektrums X(k,f) eines Rahmens des Eingangssignals durch Transformation im Frequenzbereich;
   - Mittel (5) zum Erhalten einer Rauschpegel-Schätzfunktion $\hat{\gamma}_{bb}(k,f)$ vom Spektrum X(k,f) als Funktion der Frequenz;
   - Mittel (11) zur Berechnung einer ersten Schätzfunktion $\hat{\gamma}_{ss}(k,f)$ des Nutzsignalpegels im Rahmen als Funktion der Frequenz;
   - Mittel (13) zur Berechnung der Übertragungsfunktion $\hat{H}_1(k,f)$ eines ersten Rauschreduktionsfilters auf der Basis der ersten Nutzsignalpegel-Schätzfunktion $\hat{\gamma}_{ss1}(k,f)$ und der Rauschpegel-Schätzfunktion $\hat{\gamma}_{bb}(k,f)$;
   - Mittel (14-15) zur Berechnung einer zweiten Schätzfunktion $\hat{\gamma}_{ss}(k,f)$ des Nutzsignalpegels im Rahmen als Funktion der Frequenz durch Kombinieren des Spektrums X(k,f) des Eingangssignals und der Übertragungsfunktion $\hat{H}_1(k,f)$ des ersten Rauschreduktionsfilters;
   - Mittel (16) zur Berechnung der Übertragungsfunktion $\hat{H}(k,f)$ eines zweiten Rauschreduktionsfilters auf der Basis der zweiten Nutzsignalpegel-Schätzfunktion $\hat{\gamma}_{ss}(k,f)$ und der Rauschpegel-Schätzfunktion $\hat{\gamma}_{bb}(k,f)$; und
   - Mittel (7-9) zum Filtern des Rahmens mittels der Übertragungsfunktion H(k,f) des zweiten Rauschreduktionsfilters, um ein Signal mit reduziertem Rauschen zu erzeugen.

11. Vorrichtung nach Anspruch 10, wobei die Mittel zur Berechnung eines Spektrums Mittel (2) zum Gewichten des Rahmens des Eingangssignals x(n) durch eine Fensterfunktion w(n) und Mittel (3) zum Transformieren des gewichteten Rahmens in den Frequenzbereich aufweisen, wobei die Fensterfunktion asymmetrisch ist, um auf die neueste Hälfte des Rahmens eine stärkere Gewichtung als auf die älteste Hälfte des Rahmens anzuwenden.

12. Vorrichtung nach Anspruch 10 oder 11, die Mittel (7-8) zum Bestimmen einer Impulsantwort des Rauschreduktionsfilters $\hat{h}_w(k,n)$ für den aktuellen Rahmen anhand einer Transformation der Übertragungsfunktion $\hat{H}(k,f)$ des zweiten Rauschreduktionsfilters in den Zeitbereich aufweist, wobei die Filtermittel (9) im Zeitbereich mittels der für den aktuellen Rahmen bestimmten Impulsantwort arbeiten.

13. Vorrichtung nach Anspruch 12, wobei die Mittel zum Bestimmen der Impulsantwort des Rauschreduktionsfilters $\hat{h}_w$ (k,n) Mittel (7) zum Transformieren der Übertragungsfunktion H(k,f) des zweiten Rauschreduktionsfilters in den Zeitbereich, um eine erste Impulsantwort zu erhalten, und Mittel (8) zum Kürzen der ersten Impulsantwort auf eine Kürzungslänge, die einer Anzahl von Abtastwerten entspricht, die wesentlich kleiner ist als die Anzahl von Punkten der Transformation in den Zeitbereich, aufweisen.

14. Vorrichtung nach Anspruch 13, wobei die Mittel zum Bestimmen der Impulsantwort des Rauschreduktionsfilters Mittel (8) zum Gewichten der gekürzten Impulsantwort durch eine Fensterfunktion $w_{filt}(n)$ an einer Anzahl von Abtastwerten, die der Kürzungslänge entspricht, aufweisen.

15. Vorrichtung nach einem der Ansprüche 12 bis 14, die Mittel zum Unterteilen des aktuellen Rahmens in mehrere Unterrahmen und Mittel (21) zum Berechnen einer interpolierten Impulsantwort $\hat{h}_w^{(i)}(k,n)$ für jeden Unterrahmen anhand der für den aktuellen Rahmen bestimmten Impulsantwort des Rauschreduktionsfilters $\hat{h}_w(k,n)$ und der für mindestens einen vorangehenden Rahmen bestimmten Impulsantwort des Rauschreduktionsfilters aufweist, wobei die Filtermittel (9) ein Filter (23) zum Filtern des Signals jedes Unterrahmens im Zeitbereich gemäß der für den Unterrahmen berechneten interpolierten Impulsantwort aufweisen.

**16.** Vorrichtung nach Anspruch 15, wobei die Mittel zur Berechnung der interpolierten Impulsantwort beschaffen sind, um die interpolierten Impulsantworten $\hat{h}_w^{(i)}(k,n)$ für die verschiedenen Unterrahmen des aktuellen Rahmens als gewichtete Summen der für den aktuellen Rahmen bestimmten Impulsantwort des Rauschreduktionsfilters $\hat{h}_w$ (k,n) und der für den vorangehenden Rahmen bestimmten Impulsantwort des Rauschreduktionsfilters $\hat{h}_w$(k-1,n) zu berechnen.

**17.** Vorrichtung nach Anspruch 16, wobei die für den i-ten Unterrahmen des aktuellen Rahmens ($1 \leq i \leq N$) berechnete interpolierte Impulsantwort $\hat{h}_w^{(i)}(k,n)$ gleich (N-i)/N mal die für den vorangehenden Rahmen bestimmte Impulsantwort des Rauschreduktionsfilters $\hat{h}_w$(k-1,n) plus i/N mal die für den aktuellen Rahmen bestimmte Impulsantwort des Rauschreduktionsfilters $\hat{h}_w$(k,n) ist, wobei N die Anzahl von Unterrahmen des aktuellen Rahmens ist.

**18.** Vorrichtung nach einem der Ansprüche 10 bis 17, wobei das Eingangssignal x(n) ein Audiosignal ist.

*FIG.1*

EP 1 356 461 B1

FIG.2

EP 1 356 461 B1

## FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0710 A

- EP 0918317 A


**Littérature non-brevet citée dans la description**

- **J.S. Lim ; A.V. Oppenheim.** Enhancement and bandwidth compression of noisy speech. *Proceedings of the IEEE,* 1979, vol. 67, 1586-1604
- **R.E. Crochiere ; L.R. Rabiner.** Multirate digital signal processing. Prentice Hall, 1983
- **D.L. Wang ; J.S. Lim.** The unimportance of phase in speech enhancement. *IEEE Trans. on ASSP,* 1982, vol. 30 (4), 679-681
- **S.F. Boll.** Suppression of acoustic noise in speech using spectral subtraction. *IEEE Trans. on Audio, Speech and Signal Processing,* Avril 1979, vol. 27 (2), 113-120
- **O. Cappé.** Elimination of the musical noise phenomenon with the Ephraim and Malah noise suppressor. *IEEE Trans. on Speech and Audio Processing,* Avril 1994, vol. 2 (2), 345-349
- **M. Berouti et al.** Enhancement of speech corrupted by acoustic noise. *Int. Conf. on Speech, Signal Processing,* 1979, 208-211
- **P. Lockwood ; J. Boudy.** Experiments with a non-linear spectral subtractor, hidden Markov models and the projection for robust speech recognition in cars. *Proc. of EUSIPCO'91,* 1991, 79-82

- **R. Martin.** Spectral subtraction based on minimum statistics. *Signal Processing VII: Theories and Applications, EUSIPCO'94,* Septembre 1994, 1182-1185
- **R.J. Mac Aulay ; M.L. Malpass.** Speech enhancement using a soft-decision noise suppression filter. *IEEE trans. on Audio, Speech and Signal Processing,* Avril 1980, vol. 28 (2), 137-145
- **Y. Ephraim ; D. Malah.** Speech enhancement using optimal non-linear spectral amplitude estimation. *Int. Conf. on Speech, Signal Processing,* 1983, 1118-1121
- **Y. Ephraim ; D. Malha.** Speech enhancement using a minimun mean square error short-time spectral amplitude estimator. *IEEE Trans. on ASSP,* 1984, vol. 32 (6), 1109-1121
- **Y. Ephraim ; D. Malha.** Speech enhancement using a minimum mean square error short-time spectral amplitude estimator. *IEEE Trans. on ASSP,* 1984, vol. 32 (6), 1109-1121